Europäisches Patentamt

European Patent Office

Office européen des brevets

(11) Veröffentlichungsnummer: **0 459 604 A2**

## (12) EUROPÄISCHE PATENTANMELDUNG

(21) Anmeldenummer: 91250136.8

(22) Anmeldetag: 23.05.91

(51) Int. Cl.5: **B23Q 7/08**, B24B 15/04

(30) Priorität: 29.05.90 DD 341074

(43) Veröffentlichungstag der Anmeldung:
04.12.91 Patentblatt 91/49

(84) Benannte Vertragsstaaten:
DE ES FR GB IT SE

(71) Anmelder: MIKROSA WERKZEUGMASCHINEN GmbH
Saarländer Strasse 20
O-7033 Leipzig(DE)

(72) Erfinder: Reichel, Hans-Jörg, Dipl.-Ing.
Kurt-Tucholsky-Strasse 4
O-7030 Leipzig(DE)

(54) Vorrichtung zum paarweisen Positionieren von Werkstücken mit Kopf, insbesondere Tellerventilen in Maschinen zum spitzenlosen Aussenrundschleifen.

(57) Die Erfindung bezieht sich auf das paarweise Positionieren von Werkstücken mit Kopf, insbesondere von Tellerventilen für Verbrennungsmotoren beim spitzenlosen Außenrundschleifen.

Die wesentlichen Merkmale der Erfindung bestehen darin, daß zwischen zwei spiegelbildlich im Schleifspalt liegenden Werkstücken, die Schaftenden nach innen gerichtet, von außen verstellbare axiale Anschläge (8;9) angeordnet sind, daß von außen axial wirkende Haltevorrichtungen auf die Werkstücke wirken, daß die Haltevorrichtungen mit Düsen (17) zum Saugen und Drücken oder Greiferkrallen ausgerüstet und an gesteuerten Arbeitskolben (18) gelagert sind. Damit können zwei Werkstücke zugleich präzise positioniert, zeitsparend, schonend und mit hoher Qualität hergestellt sowie zu- und abgeführt werden.

Fig.1

Die Erfindung betrifft das spitzenlose Außenrundschleifen von zugleich zwei Werkstücken mit Kopf, insbesondere Tellerventilen für Verbrennungsmotoren.

Charakteristik des bekannten Standes der Technik:

Nach DE-OS 2142567 wurde eine Vorrichtung zum Spitzenlos-Rundschleifen von Tellerventilen gefunden, mit der ein Ventil am Schaft von einer radial wirkenden Druckrolle an einen Regelkörper gedrückt, vom schräggestellten Regelkörper an einen festen oder mitlaufenden Axialanschlag gehalten und von einem Schleifkörper bearbeitet wird. Während hier der Übergang vom Schaft zum Teller und der Tellerrand geschliffen werden, sind in anderen Beispielen je nach technologischer Aufgabe auch der Schaft oder nur Teile des Schaftes zu bearbeiten (PL-74234).

Die Tellerventile können bekannterweise über Hängebahnen, Schächte und Zuteiler wie Längs- oder Drehschieber in die Schleifstelle gebracht werden. Aus der Schleifstelle entfernt werden sie mittels Auswerfer in Achsrichtung oder durch Zurückziehen des Regelkörpers mit Weithub von der Auflageschiene (US-2911763, DE-2701308, GB-944663). Auch waagerecht und senkrecht bewegte oder schwenkbare Greiferarme dienen zur Beschickung der Schleifstelle und Entfernung aus ihr (US-2961104, 2927703, 2907478, FR-1189898, 1248232, 1509829, SU-460985, 447225). Auf diese Art werden auch mehr als ein Werkstück, gleichgerichtet und hintereinanderliegend in die Schleifstelle gebracht, bearbeitet und entfernt, um höhere Stückzahlen zu erzielen.

Wegen zu großer Hilfszeiten für den Werkstückwechsel sind jedoch nicht die Stückzahlen erreichbar, die auf Grund des hohen Bedarfs gefordert werden. Zudem sind bei der Handhabung und der sicheren Positionierung der genannten Werkstücke, besonders bei zwei Werkstücken in der Schleifstelle, Grenzen gesetzt. Jedes Werkstück braucht eigene regulierbare Anschläge, die den jeweiligen technologischen Bedingungen anzupassen sind. Zwei hindereinander liegende Werkstücke können nicht mit einem Auswerfer axial abgeführt werden, weil mindestens ein Anschlag eines Werkstückes im Wege steht, der zudem noch zwischen den beiden Werkstücken im Schleifspalt anzuordnen ist, schwer zugänglich bleibt und die zum Schleifen nutzbare Breite des Schleifkörpers beschränkt, von der Beschädigung der Werkstücke beim Ausschieben oder Auswerfen ganz abgesehen. Durch den üblicherweise schräggestellten Regelkörper wird beim Einstechschleifen ein Axialvorschub erzeugt, durch den die Werkstücke mit den Köpfen oder den Schaftenden an den jeweiligen Anschlägen in der gleichen Richtung anliegen.

Gefunden wurde schließlich eine Lösung, bei der zwei Tellerventile sich im Schleifspalt spiegelbildlich gegenüberliegen, die Teller nach außen gerichtet (US-3115729). Zwischen den nach innen gerichteten Schaftenden befindet sich ein nicht regulierbarer, fest eingestellter doppelseitiger Anschlag mit in Achsrichtung der Tellerventile wirkenden Düsen, aus denen ein Druckmittel strömen kann, um die Werkstücke nach dem Schleifen nach außen zu befördern, ähnlich wie mit einem mechanischen Auswerfer, damit sie weiter abzuführen sind. Bei Schrägstellung des Regelkörpers läuft eines der beiden Werkstücke in den Schleifspalt hinein bis an den inneren Anschlag, das andere läuft aus dem Schleifspalt heraus und muß von einem von außen wirkenden Anschlag gehalten werden, der allerdings dann der Auswerferbewegung entgegenwirkt.

Ohne Schrägstellung des Regelkörpers würden sich die Werkstücke in axialer Richtung indifferent verhalten, wenn es um das Schleifen des Schaftes geht. Soll dagegen der Übergang vom Schaft zum Teller und gegebenenfalls noch der Tellerrand geschliffen werden, sind den Schleifkräften entgegenwirkende, regulierbare Anschläge von außen erforderlich, die wiederum der Abführung der Tellerventile in Richtung ihrer Achse nach außen mittels Auswerferstangen oder Druckmittel aus Düsen im Wege stehen. Die Anschläge müßten deshalb ortsveränderlich angeordnet werden. Die erforderliche Positioniergenauigkeit der Werkstücke würde dadurch negativ beeinflußt. Auch das Abführen der Werkstücke mittels bereits beschriebenen Weithubes, bei dem die Werkstücke zwischen Auflageschiene und Regelkörper abfallen können, ist mit zu hohen Hilfszeiten verbunden.

Ziel der Erfindung:

Kürzere Werkstückwechselzeiten und Erhöhung der Produktivität beim spitzenlosen Außenrundschleifen von Werkstücken mit Kopf, besonders Tellerventilen für Verbrennungsmotoren, ist das Ziel der Erfindung. Dazu gehört die Schaffung einer zuverlässigen Vorrichtung mit möglichst einfachen und relativ wenigen Konstruktionselementen, die geringen Raum beansprucht und eine schonende Werkstückhandhabung gewährleistet sowie eine genaue axiale Positionierung garantiert, um eine hohe Qualität der Teile zu sichern.

Darlegung des Wesens der Erfindung:

Aufgabe der Erfindung ist es, eine Vorrichtung zum paarweisen Positionieren von Werkstücken mit Kopf, insbesondere Tellerventilen für Verbrennungsmotoren in Maschinen zum spitzenlosen Außenrundschleifen zu schaffen. Zwei Werkstücke sind zugleich zu schleifen, die sich in der Schleifstelle spiegelbildlich gegenüberliegen, die Köpfe nach außen gerichtet. Die nach innen gerichteten Schaftenden der Tellerventile sollen an von außen einstellbaren Anschlägen anliegen, obwohl die Achsen von Schleif- und Regelkörper parallel eingestellt sind und dadurch keine eindeutige axiale Fixierung der Werkstücke gewährleistet werden kann. Bei Schwenkung des Regelkörpers würde nur ein Schaftende sich axial am inneren Anschlag anlegen. Das Schaftende des anderen Werkstückes würde sich von seinem inneren Anschlag entfernen. Die erforderliche Lage der Werkstücke in der Schleifstelle soll nicht durch Schrägstellung der Werkstücke zur Regelkörperachse verändert werden. Die somit erzeugten Axialkräfte würden zu hohen Einrichteaufwand erfordern und Qualität sowie Produktivität negativ beeinflussen. Die Werkstücke gelangen von Hängebahnen in Schächte, aus denen sie über Zuteiler in Form von Längs- oder Drehschiebern der Schleifstelle lagegerecht zugeführt werden. Mit wenig bewegten Teilen soll die richtige Positionierung der Werkstücke während des Schleifens und die Abführung zeitsparend und schonend gewährleistet werden.

Erfindungsgemäß wird die Aufgabe gelöst, daß zwischen den Schaftenden der Werkstücke axiale Anschläge vorgesehen sind, die mit in Achsrichtung geführten Zahnstangen, über Ritzel und Wellen und mit Klemmeinrichtungen in Wirkverbindung stehen und vor jedem Kopf der Werkstücke je eine axial verstellbare, mit einem Antriebsmechanismus verbundene Haltevorrichtung vorgesehen ist. Die Haltevorrichtung besitzt die Form einer Düse, welche mit einem Druckerzeuger für Über- und/oder Unterdruck verbunden ist. Die Haltevorrichtung kann auch mit in Gelenken schwenkbaren Greiferkrallen ausgerüstet sein, die mit einem Betätigungsmechanismus verbunden und um die Achse der Haltevorrichtung drehbar befestigt sind. Als Antriebsmechanismus für jede Haltevorrichtung ist ein Arbeitskolben angeordnet.

Die Vorrichtung funktioniert wie folgt:

Je nach Schleifaufgabe dienen die inneren axialen Anschläge oder die äußeren Haltevorrichtungen durch ihre axiale Einstellbarkeit zur Positionierung der Werkstücke in der Schleifstelle. Wird eine axiale Fixierung am Schaftende gefordert, werden die Arbeitskolben und die Düsen mit Druck beaufschlagt. Sie gewährleisten die sichere Anlage der Schaftenden an den inneren axialen Anschlägen. Nach dem Schleifen wird der Druck abgeschaltet bzw. die Düsen auf Unterdruck umgeschaltet, so daß bei geöffnetem Schleifspalt die Werkstücke am Kopf angesaugt bzw. mittels Greiferkrallen gehalten werden, durch axiale Bewegung des Arbeitskolbens rasch aus dem Schleifspalt entfernbar sind und über einem Abführband oder einer Abführrinne abfallen können. Andererseits ist es möglich, unbearbeitete Werkstücke vor den mit Unterdruck beaufschlagten Düsen zu positionieren, durch den Saugvorgang festzuhalten und in den Schleifspalt zu befördern. Währenddessen können von oben unbearbeitete Werkstücke bereitgestellt werden. Jede Düse kann auch als Anschlag dienen, wenn die Fixierung am Kopfende der Werkstücke erfolgen muß, wobei ein gesteuerter Luftspalt die ungehinderte Drehbewegung des zu schleifenden Werkstückes garantieren kann oder geeignete Mittel zur Gewährleistung der Drehbewegung der Haltevorrichtung zusammen mit dem Werkstück eingesetzt werden.

Ausführungsbeispiel:

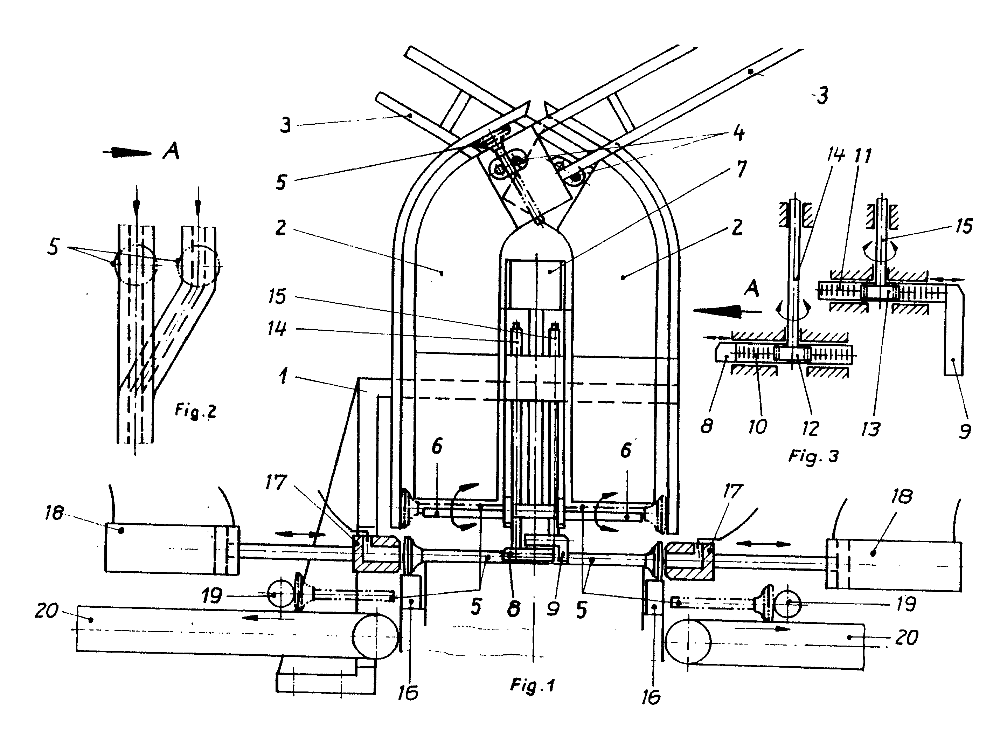

Der Aufbau der Vorrichtung wird anhand von Zeichnungen erläutert. Figur 1 zeigt eine Vorderansicht, Figur 2 zeigt eine Seitenansicht einer Schachtführung für Werkstücke, Figur 3 zeigt eine vergrößerte Vorderansicht der inneren verstellbaren axialen Anschläge. Die Einrichtung wird durch ein Gestell 1 am Maschinenrahmen oder an entsprechenden Schlitten befestigt. An diesem Gestell 1, das mit entsprechenden Verstellmöglichkeiten ausgerüstet ist, werden Schachtführungen 2 und Hängebahnen 3 befestigt. Eine Wechselsperre 4 ist am bogenförmigen Teil der Schachtführungen 2 angebracht und läßt zwei Finger wechselseitig in die am Kopf aufgehängten Werkstücke 5 zur Vereinzelung eintauchen. Diese Bewegung ist durch einen Pneumatikzylinder erzeugbar. Zwischen den beiden Schachtführungen 2 sind am unteren Ende um ihre Längsachsen drehbare, muldenförmige Zuteiler 6 angebracht, die durch einen Zugmagneten 7 über Hebel und Stange betätigt werden. Axiale Anschläge 8;9 sind über Zahnstangen 10;11, Ritzel 12;13 und Wellen 14;15 verstellbar und mit bekannten Mitteln wie Druckstück und Klemmschraube klemmbar. Die Abstützungen 16 sind einstellbar angebracht. Die als Düsen 17 ausgebildeten Haltevorrichtungen sind an den Kolbenstangen einstellbarer Arbeitszylinder 18 befestigt. Eine Abführkontrolle erfolgt mit Initiatoren 19. Die Bandabführungen 20 oder nicht dargestellte Abführrinnen sind am Maschinenrahmen oder den entsprechenden Schlitten befestigt.

Bezugszeichen

| | |
|---|---|
| 1 - | Gestell |
| 2 - | Schachtführung |
| 3 - | Hängebahn |
| 4 - | Wechselsperre |
| 5 - | Werkstück |

| | |
|---|---|
| 6 - | Zuteiler |
| 7 - | Zudmagnet |
| 8;9 - | axialer Anschlag |
| 10;11 - | Zahnstange |
| 12;13 - | Ritzel |
| 14;15 - | Welle |
| 16 - | Abstützung |
| 17 - | Düse |
| 18 - | Arbeitskolben |
| 19 - | Initiator |
| 20 - | Bandabführung |

**Patentansprüche**

1.  Vorrichtung zum paarweisen Positionieren von Werkstücken mit Kopf, insbesondere Tellerventilen in Maschinen zum spitzenlosen Außenrundschleifen, wobei die Werkstücke sich spiegelbildlich gegenüberliegen, die Köpfe nach außen gerichtet sind und zwischen den nach innen gerichteten Schaftenden ein doppelseitiger, fest eingestellter Anschlag mit in Achsrichtung der Werkstücke wirkenden Düsen angeordnet ist, dadurch gekennzeichnet, daß die axialen Anschläge (8;9) mit in Längsrichtung geführten Zahnstangen (10;11), über Ritzel (12;13) und Wellen (14;15) und mit Klemmeinrichtungen in Wirkverbindung stehen und vor jedem Kopf der Werkstücke je eine axial verstellbare, mit einem Antriebsmechanismus verbundene Haltevorrichtung vorgesehen ist.

2.  Vorrichtung nach Anspruch 1, dadurch gekennzeichnet, daß die Haltevorrichtung die Form einer Düse (17) besitzt, welche mit einem Druckerzeuger für Über- und/oder Unterdruck verbunden ist.

3.  Vorrichtung nach Anspruch 1, dadurch gekennzeichnet, daß die Haltevorrichtung mit in Gelenken schwenkbaren Greiferkrallen ausgerüstet ist, die mit einem Betätigungsmechanismus verbunden und um die Achse der Haltevorrichtung drehbar befestigt sind.

4.  Vorrichtung nach Anspruch 1, 2 und 3, dadurch gekennzeichnet, daß als Antriebsmechanismus für die Haltevorrichtung ein Arbeitskolben (18) angeordnet ist.

Fig. 1

Fig. 2

Fig. 3